# EUROPÄISCHE PATENTANMELDUNG

(11) **EP 1 369 226 A1**
(43) Veröffentlichungstag der Anmeldung: **10.12.2003**
(21) Anmeldenummer: 03011773.3
(22) Anmeldetag: 24.05.2003
(51) Int. Cl.: B32B 15/08, B32B 7/14, B32B 31/00

(54) **Mehrschichtige Bahn**

(30) Priorität: 31.05.2002 DE 10224511
(71) Anmelder: FAGERDALA WORLD FOAMS AB, S-134 82 Gustavsberg (SE)
(72) Erfinder: Berggren, Jonas, S-31044 Getinge (SE); Berggren, Roger, S-31044 Getinge (SE)
(74) Vertreter: Kaewert, Klaus

(57) **Zusammenfassung**

Nach der Erfindung werden mehrschichtige Bahnen als Abdichtungsbahnen oder Dampfsperrbahnen oder Trittschalldämmung nicht mehr vollflächig sondern nur noch teilflächig am Bahnenrand miteinander verbunden.

## Beschreibung

Die Erfindung betrifft eine mehrschichtige, wickelfähige Bahn als Abdichtungsbahn oder Sperrbahn oder Trittschalldämmung,
wobei die Schichten durch Kaschierung miteinander verbunden sind,
wobei mindestens eine der Schichten durch eine Kunststoffschaumschicht und wobei mindestens eine zweite Schicht durch eine Folie gebildet wird.

Die Wickelfähigkeit der Bahnen ist eine wichtige Eigenschaft, denn der Herstellung und dem Transport der Bahnen sind erhebliche Grenzen gesetzt. Durch Wicklung kann den Bahnen ein sehr vorteilhaftes Lager- und Transportvolumen gegeben werden.

Die beschriebenen Bahnen kommen am Bau vor allem vor
a) in Feuchträumen
b) im Bodenaufbau oder in Wänden gegen aufsteigende Feuchtigkeit
c) im Dachaufbau gegen aufsteigenden Wasserdampf
d) im Bodenaufbau zur Dämmung des Trittschalls

In allen Bereichen finden Kunststoffbahnen Anwendung.
Häufig in mehrschichtiger Form und vorzugsweise aus Polyethylen (PE). Es findet auch Polypropylen (PP) Anwendung.
Dabei werden auch geschäumte und ungeschäumte Kunststoffbahnen durch Kaschierung miteinander verbunden.

Unter Kaschierung wird üblicherweise eine vollflächige Verbindung der Kunststoffbahnen verstanden. Der klassische Kaschiervorgang beinhaltet eine Erwärmung der Kaschierflächen und ein Aneinanderdrücken. Dabei kann die Erwärmung bis auf Schweißtemperatur stattfinden. Zur Erwärmung sind Strahlungseinrichtungen, Heißgebläse und auch Heißrollen (beheizte Rollen) oder Schweißschuhe oder Heizkeilen geeignet. Die Strahlungseinrichtung erzeugt Strahlungswärme, das Heizgebläse erzeugt Heißluft bzw. Heißgas.

Heißluft kann mit Hilfe einer elektrisch betriebenen Heizspirale und eines Gebläses erzeugt werden. Dabei wird die Luft an der Heizspirale entlang geführt.
Andere Heißgase können durch Verbrennung von Gas oder Öl erzeugt werden. Vorzugsweise werden die durch Verbrennung entstandenen Gase (Flamme) direkt gegen die zu erwärmende Fläche gerichtet. Es wird von einer Flammkaschierung gesprochen.
Die Strahlungseinrichtung und das Heißgebläse sind üblicherweise elektrisch betrieben. Die Temperatur ist über den Strom leicht steuerbar. Auch die Heißrollen oder Schweißschuhen und Heizkeilen sind vorzugsweise elektrisch beheizt und über den Strom steuerbar. Diese Einrichtungen berühren die Kaschierungsflächen an den Bahnen.
Zum Teil findet auch eine Erwärmung der Kaschierflächen durch die Folie hindurch statt.

Bei allen Vorrichtungen ist regelmäßig nicht nur eine genaue Temperierung sondern auch eine Regelung der Vorschubgeschwindigkeit vorgesehen.

Das beschriebene klassische Kaschieren bedingt eine Kaschierfähigkeit der miteinander zu verbindenden Materialien. Bei miteinander zu verbindenden Kunststoffen wird die Kaschierfähigkeit erreicht, wenn die Kunststoffe gleich beschaffen sind, zumindest aber in einem wesentlichen Mischungsanteil gleich beschaffen sind. Auch andere Materialien können in klassischer Kaschierweise miteinander verbunden werden, wenn sie entsprechend vorbereitet sein. So kann auch eine Metallfolie mit einer Kunststoffbahn verbunden werden. Üblicherweise kommen dabei Haftvermittler zwischen der Folienbahn und der Kunststoffbahn zum Einsatz.

Im vorliegenden Fall umfaßt die Definition "Kaschieren" sowohl die unmittelbare Verbindung als auch die mittelbare Verbindung über zwischenliegende Materialien. Zwischenliegende Materialschichten kann Kunststoff-Folie oder auch ein Heißkleber sein. Es ist auch bekannt eine Zwischenschicht aus Polymerschmelze einzubringen. Die Polymerschmelze kann auf die Kaschierflächen extrudiert werden. Dann wird vom Extrusionskaschieren gesprochen.

Aus dem Deutschen Gebrauchsmuster 1863768 aus dem Jahre 1962 ist eine kaschierte Schaumstoffbahn bekann, die mittels örtlich begrenzt aufgetragener pulverisierter oder granulierter thermoplastische Kunststoff mit einem verfestigten Faservlies und Aussparung von kunststofffreien Stellen verbunden ist. Auf dem Wege sollen Isolierplatten, Stoßdämpfer, Einlagestoffe, Trägerbänder hergestellt werden. Vorzugsweise ist eine punktweise Verbindung der Schichten vorgesehen. Die Verbindungspunkte sind über der Fläche gleichmäßig verteilt. Das Gesamtprodukt ist atmungsaktiv und feuchtigkeitsdurchlässig. Je nach der verwendeten Schaumstoff- oder Faservliesseite kann eine Abdeckung, eine Kompression, ein Strahlenschutz bei metallisiertem Faservlies und eine Saugfähigkeit erreicht werden. Zumindest fehlt der bekannten Schaumstoffbahn die für erfindungsgemäße Bahn wesentliche Folie.

Aus der deutschen Patentschrift 19640402 ist ein schalldämmendes Verbundelement bekannt, das aus mehreren Hartschaumplatten zusammen gesetzt ist. Die beiden Hartschaumplatten sind an den einzelnen Stellen derart miteinander verbunden, daß die zur Plattenhauptebene parallelen Plattenoberseiten weitgehend zueinander parallel ausgerichtet sind, und daß die zueinander gerichteten Plattenoberseiten voneinander beanstandet sind. Der Abstand soll 1 bis 5 mm betragen. Der Abstand soll durch Stege bewirkt werden, die einen Abstand von 7 bis 15 cm aufweisen. Die Stege sollen durch Schmelzkleber entstehen, der als Kleberraupen gelegt wird. Solchen Verbundenelementen fehlt bereits die Wickelfähigkeit.

Aus der deutschen Offenlegungsschrift 19522216 ist ein Verfahren zur Herstellung einer Akustikplatte bekannt, die aus einer Trägerplatte und einem Vlies oder Gewebe besteht. Zwischen beiden ist eine Klebeverbindung vorgesehen, wobei der Kleber in Form eines Rasters aufgetragen wird. Die Platten sind nicht wickelfähig. Es fehlt auch die für die erfindungsgemäße Bahn wesentliche wesentliche Folie.

Aus dem deutschen Gebrauchsmuster G9403951.8 ist die Montage mit Wand- und Deckenplatten mit doppelseitig klebenden Klebebändern bekannt. Die Klebebänder sollen dabei wahlweise streifenförmig oder kreuzförmig mittig und an den Seiten überstehend angeordnet werden. Diese Platten sind weder wickelfähig, noch dienen die Klebebänder dem Kaschieren. Vielmehr sind die Klebebänder als Montagehilfen beim Verlegen der Platten vorgesehen.

Obwohl eine teilflächige Kaschierung aus den oben wiedergegebenen Stand der Technik bekannt ist, ist das vollflächige Kaschieren bei der Verbindung von wickelfähigen Schaumschichten und Folien ständige Praxis. Die an sich bekannte teilflächige Kaschierung ist in der Anwendung auf die Verbindung von Folien und Schaumschichten zudem problematisch. Je dünner die Folien sind, desto mehr zeichnet sich die Kaschierung an der Folienoberfläche ab.
Das führt die Erfindung darauf zurück, daß durch das Heiß-Kaschieren der Kunststoffschaum an der Kaschierfläche zusammenbricht bzw. aufschmilzt. Damit ist eine Verringerung der Schaumdicke verbunden.
Gleichwohl hat sich die Erfindung der teilflächigen Kaschierung zugewandt.

Nach der Erfindung findet eine linienförmige Kaschierung an den Bahnenrändem und vorzugsweise unter vollständiger Freilassung des Raumes zwischen den Bahnenrändern statt. Überraschender Weise wird damit weder die Aufwickelung der Bahn erschwert, noch ergeben sich trotz der geringen Verbindung nennenswerte Hindernisse bei der Verlegung.
Auf der anderen Seite ergeben sich zwischen den Bahnenrändern extrem gute Oberflächenqualitäten. Die Beschaffenheit der Schaumbahn und der Folie wird zwischen den Bahnenrändern nicht beeinflußt.

Die Kaschierungslinien bilden eine gewünschte Verbindung. Die Kaschierungslinien können durchgehend oder unterbrochen sein. Diese linienförmige Kaschierung unterscheidet sich von allen vorstehend beschriebenen teilflächigen Kaschierungen wesentlich. Die Erfindung hat sich von der Vorstellung einer notwendigen vollflächigen Kaschierung gelöst und ist zu einer teilflächigen Kaschierung übergegangen.

Bei der teilflächigen Kaschierung bleibt der Schaum zwischen den Kaschierflächen vollständig erhalten. Beim teilflächigen Aufkaschieren einer dünnen ungeschäumten Folie auf eine Schaumschicht bleibt auch die Folie zwischen den Kaschierstellen ungestört. Besonders vorteilhaft ist die teilflächige Kaschierung für dünne, ungeschäumte Folien. Während die dünne ungeschäumte Folie sich bei vollflächiger Kaschierung auch vollflächig der Oberfläche der Schaumschicht anpaßt, so daß sich die unregelmäßige Schaumoberfläche an der Folienoberfläche abbildet, bleibt die dünne Folie bei teilflächiger Kaschierung zwischen den Verbindungsstellen/Kaschierung glatt. Das verbessert nicht nur die Optik sondern auch andere Eigenschaften, z.B. das Ablaufen von Wasser.

Nach der Erfindung bedeckt die Kaschierung am Bahnenrand höchstens einen Streifen von 10 cm, vorzugsweise einen Streifen von höchstens 5 cm, noch weitere bevorzugt einen Streifen von höchstens 3 cm. Das gilt bei üblichen Bahnbreiten bis maximal 1.200 mm, auch bei größeren Bahnenbreiten. Bei wesentlich größeren Bahnbreiten kann mittig ein weiterer linienförmiger Kaschierstreifen vorgesehen sein.

Vorzugsweise erfolgt die Kaschierung mittels Heißkleber.

Vorzugsweise steht die ungeschäumte Folie gegenüber dem Kunststoffschaum an einem Bahnenrand über, so daß ein Überlappungsrand besteht. Der Folien-Überlappungsrand kann an beiden Bahnenrändern bestehen.
Vorzugsweise ist jedoch nur an einer Seite ein Folien-Überlappungsrand vorgesehen. Bei einer Verlegung von zwei Bahnen nebeneinander kann infolgedessen die eine Bahn mit ihrer Folie die benachbarte Bahn überlappen..
Wenn die Bahnen beidseitig mit einem Folien-Überlappungsrand hergestellt werden, kann der eine Folien-Überlappungsrand unter die benachbarte Bahn gelegt werden, damit er die Überlappung durch den Folien-Überlappungsrand an der benachbarten Bahn nicht stört.

Der Folien-Überlappungsrand eignet sich sehr vorteilhaft für eine Klebeverbindung zwischen benachbarten Bahnen oder zu einer Klebeverbindung mit dem Untergrund oder zu einer Klebeverbindung mit angrenzenden Gebäudewänden.
Die Klebeverbindung kann mit Hilfe von Klebestreifen bzw. Klebebändern verwirklicht werden. Vorteilhaft sind Selbstklebestreifen, besonders vorteilhaft sind beidseitig klebende Klebestreifen bzw. Klebebänder. Die Klebestreifen bzw. Klebebänder werden mit einer klebenden Seite unter dem Überlappungsrand angebracht. Die andere Seite ist abgedeckt. Die Abdeckung kann ein Papierstreifen sein und wird abgezogen, wenn eine Klebeverbindung zu einer benachbarten Bahn entstehen soll.

Die Kunststoffschichten der erfindungsgemäße Bahn können aus unterschiedlichen Kunststoffen bestehen. Wahlweise ist auch eine Kombination mit Metallfolien vorgesehen. Desgleichen können metallbedampfte Schichten kombiniert werden.

Vorzugsweise finden gleichartige Kunststoffe Anwendung, noch weiter bevorzugt finden Polyethylen (PE) und Polypropylen (PP) Anwendung.
Vorzugsweise besitzt die erfindungsgemäße Bahn eine Folie als Deckschicht und eine Schaumschicht als Unterlage. Die Folie besitzt vorzugsweise eine Dicke bis 0,5 mm, noch weiter bevorzugt eine Dicke bis 0,1mm. Die Dicke kann jedoch auch kleiner/gleich 0,05 mm, sogar kleiner 0,01mm sein.

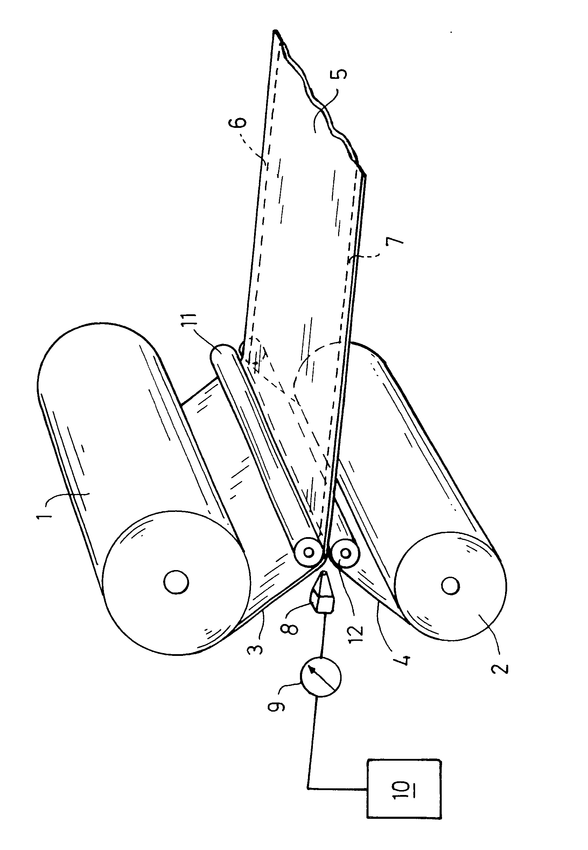

In der Zeichnung ist ein Ausführungsbeispiel der Erfindung dargestellt.

Mit 1 ist eine Vorratsrolle für PE-Schaum 3 bezeichnet, der ein Raumgewicht von 30 kg pro Kubikmeter, eine Dicke von 2 mm und eine Breite von 750 mm hat. Andere Ausführungsbeispiel besitzen einen PE-Schaum mit einem Raumgewicht von bis 40 kg pro Kubikmeter, eine Dicke bis 10mm und eine Breite bis 2m oder mehr.

Im Ausführungsbeispiel besteht der PE-Schaum zu 100% aus PE. In anderen Ausführungsbeispielen kommen Mischungen vor. Dann beträgt der PE-Anteil in der Mischung mindestens 50Gew%.

In weiteren Ausrührungsbeispielen kann an die Stelle von PE-Schaum auch PP-Schaum treten.

Die Vorratsrolle 1 wird in üblicher Form gehalten. Das schließt eine stabile rohrförmige Achse und Lagerböcke für die Achse ein, wie auch eine Bremse, mit der jede gewünschte Spannung in der PE-Schaumbahn 3 erzeugt werden kann.
Die Bremse besteht im einfachsten Fall aus einem Textil oder Leder oder dergleichen, welches über der Rolle liegt und zur Erzeugung einer bestimmten Reibung mit einem Gewicht beschwert ist. Durch Einstellung der Reibung wird die gewünschte Spannung erzeugt.

Mit 2 ist eine Vorratsrolle für eine ungeschäumte PE-Folie 4 bezeichnet, die PE-Folie hat eine Dicke von 0,2 mm und die gleiche Breite wie der PE-Schaum 3. Andere
Ausführungsbeispiele besitzen eine PE-Folie mit einer Dicke, die zwischen 0,5 mm und 0,1 mm oder noch geringer ist.
Andere Ausführungsbeispiel besitzen auch ungeschäumte PE-Folien mit einer größeren Breite als die Schaumfolie.
Für die mögliche Mischung des PE für die Folie gilt das gleiche wie für die Schaumfolie.

Wie beim Kunststoffschaum ist auch bei der Folie möglich, PE durch PP zu ersetzen.

In allen erläuterten Ausführungsbeispielen wird jedoch nur PE-Schaum mit PE-Folie kombiniert. Bei der Anwendung von PP wird in den erläuterten Ausfiihrungsbeispielen nur PP-Schaum mit PP-Folie kombiniert.

Die Vorratsrolle 2 wird in der gleichen Weise wie die Vorratsrolle 1 gehalten und gebremst.

Die Bahnen 3 und 4 werden durch zwei Walzen 11 und 12 zusammengeführt und zusammengedrückt. Zugleich wird am Bahnenrand mittels Düsen 8 und Pumpen 9 aus einem beheizten Vorratsbehälter 10 Heißkleber dünn zwischen die Bahnen 3 und 4 gesprüht.
In anderen Ausführungsbeispielen wird der Heißkleber allein auf die Bahn 3 gesprüht und anschließend beide Bahnen 3 und 4 zusammengeführt. Oder es wird der Heißkleber allein auf die Bahn 4 gesprüht und anschließend beide Bahnen 3 und 4 zusammengerührt.

Durch Aufsprühen des Heißklebers und anschließendes Zusammenführen der Bahnen 3 und 4 entstehen an den Bahnenrändern Kaschierstreifen 6 und 7, welche die Bahnen 3 und 4 zu einem mehrschichtigen Material 5 miteinander verbinden.

Wahlweise werden die Düsen 8 aus einem gemeinsamen Vorratsbehälter mit einer gemeinsamen Pumpe mit Heißkleber beaufschlagt. Die Verteilung des Heißklebers auf die verschiedenen Leitungen kann über einen Ventilblock erfolgen. Der Ventilblock eignet sich auch dazu, den Heißkleber im Falle einer Betriebsunterbrechung wieder in den Vorratsbehälter 10 zurückzufahren.
Der Heißkleberdruck kann an der Düse oder an vorgeschalteten Ventilen eingestellt werden.

Besonders fein läßt sich der Heißkleber auftragen, wenn der Heißkleber in einen Druckluftstrom aufgegeben und mit der aus der Düse austretenden Druckluft zerstäubt wird. Dabei kann der Heißkleber mit einer Pumpe oder anderen Mitteln in den Druckluftstrom dosiert werden. Der Heißkleber kann auch mit dem Druckluftstrom aus dem Vorratsbehälter angesaugt werden.

Vorteilhaft ist es, die Kaschierstreifen in geringem Abstand vom äußeren Bahnenrand zu erzeugen. Dadurch wird verhindert, daß Kleber seitlich zwischen den Schichten austreten kann. Ein ausreichender Abstand kann bereits 0,5 cm sein. Üblicherweise ist mehr als ein Abstand von 1 cm nicht erforderlich. In Sonderfällen kann ein Abstand von 1,5 cm erforderlich werden. Unabhängig davon kann aus anderen Gründen ein beliebiger Abstand eingestellt werden.

In anderen Ausführungsbeispielen mit einer Bahnenbreite von 1200 bis 2500 mm ist neben den Kaschierstreifen am Rand noch ein mittiger Kaschierstreifen vorgesehen.
Mit der oben beschriebenen Anlage zum Auftragen von Heißkleber beinhaltet es nur geringen Aufwand, neben den beiden erläuterten Düsen für die Erzeugung der Kaschierstreifen am Rand noch eine dritte Düse zur Erzeugung des mittigen Kaschierstreifens anzubauen. Das gilt auch für gegebenenfalls gewünschte weitere Kaschierstreifen.
Vorzugsweise sind dann alle Düsen gleich, auch mit der gleichen Verstellung und mit der gleichen Zurührung versehen.

Die Walzen 11 und 12 können über ihrer ganzen Länge von gleichmäßigem Durchmesser sein. Wahlweise ist auch im Bereich der Kaschierstreifen eine geringe Verdickung vorgesehen, mit der eine zusätzliche Anpressung erzeugt wird. Die Positionierung der Verdickung kann dadurch erreicht werden, daß die Walzen aus Hülsen und einem Kern bestehen. Die Hülsen werden in angepaßter Länge auf den Kern geschoben. Im dargestellten Ausführungsbeispiel besitzen die Hülsen für die beiden Kaschierstreifen eine Länge von 2 cm. Die dazwischen liegende Hülse hat eine Länge, die dem Abstand der Kaschierstreifen entspricht und die äußeren Hülsen haben eine Länge von 1 cm, die dem Abstand der Kaschierstreifen vom Rand entspricht.

Anstelle einer Hülse können auch jeweils mehrere Hülsen vorgesehen sein.
Zur Positionierung der Hülsen sind auch dünne Positionierungsringe von Vorteil.

Im übrigen ist es von Vorteil, die Walzen mit einer nachgiebigen Walzenanstellung zu versehen. Die Walzen können sich dann allen Dickenänderungen anpassen. Auch bei geringem Kleberauftrag ist bei einer Verringerung der Dicke noch ein ausreichende Anpressung gewährleistet.

Das Verlegen der erfindungsgemäßen Bahn auf einer Rohdecke oder an anderer Stelle erfolgt wie beim Verlegen einer herkömmlich vollflächig kaschierten Bahn. Dabei wird die Bahn den Abmessungen der Rohdecke angepaßt. Das geschieht wahlweise mit einer Schere oder einem Messer. Überraschender Weise läßt sich die erfindungsgemäße Bahn genauso schneiden wie eine herkömmliche Bahn.
Das Verlegen der erfindungsgemäßen Bahn schließt auch ein, daß die Bahnen bei entsprechenden Deckenabmessungen nebeneinander verlegt werden und sich dabei mit ihren Rändern überlappen. Dies entspricht auch der Verlegung herkömmlich vollflächig kaschierter Bahnen.

## Patentansprüche

1. Mehrschichtige, wickelfähige Bahn als Abdichtungsbahn oder Sperrbahn oder Trittschalldämmung, wobei die Schichten durch Kaschierung miteinander verbunden sind, wobei mindestens eine der Schicht eine Kunststoffschaumschicht ist und eine weitere Schicht eine ungeschäumte Folie ist, wobei eine teilflächige Kaschierung in Linienform als Verbindung zwischen den Schichten vorgesehen ist, wobei die linienförmigen Kaschierungen in Längsrichtung der Bahnen am Bahnenrand verlaufen.

2. Bahn nach Anspruch 1, **dadurch gekennzeichnet, daß**
a) die Breite der Kaschierstreifen und Linien höchstens 10 cm beträgt, vorzugsweise höchstens 5 cm und noch weiter bevorzugt höchstens 3 cm beträgt
b) mit einer Schaumbahn (3) aus einer PE oder PP
c) mit einer Schaumbahn-Dicke von 1 bis 10 mm
d) bei einem Schaumbahn-Raumgewicht von 20 bis 120 kg pro Kubikmeter, vorzugsweise bis 40 kg pro Kubikmeter und
e) mit einer ungeschäumten Folie aus PE oder PP
f) mit einer Folien-Dicke kleiner/gleich 0,5 mm, vorzugsweise mit einer Folien-Dicke kleiner/gleich 0,3 mm und noch weiter bevorzugt einer Folien-Dicke kleiner/gleich 0,1 mm.

3. Bahn nach Anspruch 1 oder 2, **dadurch gekennzeichnet, daß** bei einer Bahnenbreite von 1200 mm bis 2500 zwischen den parallelen Kaschierstreifen am Bahnrand mittig noch ein weiterer Kaschierstreifen vorgesehen ist.

4. Bahn nach einem der Ansprüche 1 bis 3, **dadurch gekennzeichnet, daß** dic Kaschierung eine Heißkleberkaschierung ist.

5. Bahn nach Anspruch 4, **gekennzeichnet durch** aufgesprühten Heißkleber.

6. Bahn nach Anspruch 4 oder 5, **gekennzeichnet durch** einen Heißkleberauftrag auf beiden Bahnen (3,4) und/oder auf einer der Bahnen (3,4).

7. Bahn nach einem der Ansprüche 1 bis 6, **dadurch gekennzeichnet, daß** alle Schichten aus PE oder aus PP bestehen,
wobei eine PE-Schicht aus einem Gemisch bestehen kann, in dem der Anteil von PE mindestens 50Gew% beträgt,
bzw. wobei eine PP-Schicht aus einem Gemisch bestehen kann, in dem der Anteil von PP mindestens 50Gew% beträgt.

8. Bahn nach einem der Ansprüche 1 bis 7, daß die Kaschierstreifen bei Heißkleber-Kaschierung vom Bahnenrand einen Abstand von 0,5 bis 1,5 cm aufweisen.

9. Bahn nach einem der Ansprüche 1 bis 8, **gekennzeichnet durch** einen Folienüberstand, der einen Überlappungsrand bildet.

10. Bahn nach Anspruch 11, **gekennzeichnet durch** eine Klebeverbindung der neben einander verlegten Bahnen an dem Folienüberstand.

11. Bahn nach Anspruch 10, **gekennzeichnet durch** einen Selbstklebestreifen am Folienüberstand.

12. Bahn nach einem der Ansprüche 1 bis 11, **gekennzeichnet durch** eine Bahnenbreite bis 2,5m.
